# EUROPEAN PATENT APPLICATION

(11) **EP 3 454 091 A1**
(43) Date of publication of application: **13.03.2019**
(21) Application number: 18159004.3
(22) Date of filing: 27.02.2018
(51) Int. Cl.: G01T 1/17

(54) **RADIATION DETECTION DEVICE AND RADIATION DETECTION METHOD**

(30) Priority: 12.09.2017 JP 2017175080
(71) Applicant: KABUSHIKI KAISHA TOSHIBA, Minato-ku Tokyo 105-8001 (JP)
(72) Inventor: KAWATA, Go, Tokyo, 105-8001 (JP); HASEGAWA, Rei, Tokyo, 105-8001 (JP)
(74) Representative: Moreland, David

(57) **Abstract**

According to an arrangement, a radiation detection device (10) includes an acquisition unit (14A) and an identifying unit (14F). The acquisition unit (14A) is configured to acquire an output waveform, from a detector (12) configured to output the output waveform according to radiation. The identifying unit (14F) is configured to identify a type of radiation incident on the detector, based on a first integrated value of the output waveform in a first integration period and a second integrated value of the output waveform in a second integration period.

## Description

### FIELD

The present disclosure relates to a radiation detection device and a radiation detection method.

### BACKGROUND

A detector that detects radiation using an output waveform output through photoelectric conversion has been known. Moreover, a configuration for detecting a plurality of types of radiation has been known.

For example, a configuration for detecting the types of radiation, using a plurality of detectors that detect different types of radiation has been known. Moreover, a configuration for estimating a type of the incident radiation by digitally sampling the pulse output from the detector has been known. However, in the conventional technology, it has been troublesome to identify the type of radiation, because the number of detectors as many as the types of radiation to be detected is required, or digital sampling needs to be performed.

### BRIEF DESCRIPTION OF THE DRAWINGS

FIG. 1 is a schematic view illustrating a detection system;
FIG. 2 is a schematic view illustrating a detector;
FIG. 3 is a schematic view illustrating an output waveform;
FIG. 4A to FIG. 4C are schematic views each illustrating a data configuration of detected result information and radiation type management information;
FIG. 5 is a schematic view illustrating a relation between a first integrated value and a second integrated value;
FIG. 6 is a flowchart illustrating a procedure of information processing; and
FIG. 7 is a block diagram illustrating a hardware configuration example.

### DETAILED DESCRIPTION

According to an arrangement, a radiation detection device includes an acquisition unit and an identifying unit. The acquisition unit is configured to acquire an output waveform, from a detector configured to output the output waveform according to radiation. The identifying unit is configured to identify a type of radiation incident on the detector, based on a first integrated value of the output waveform in a first integration period and a second integrated value of the output waveform in a second integration period.

Hereinafter, the present arrangement will be described in detail with reference to the accompanying drawings.

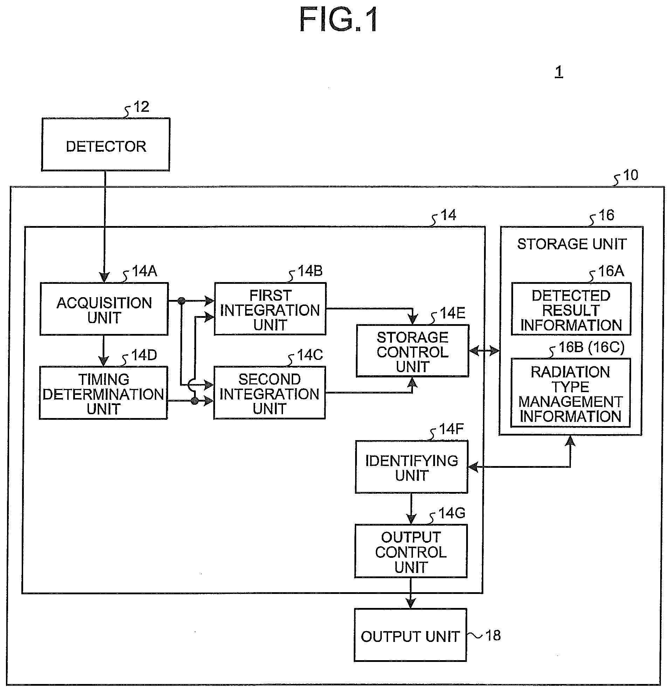

FIG. 1 is a schematic view illustrating an example of a detection system 1 of the present arrangement.

The detection system 1 includes a radiation detection device 10 and a detector 12. The radiation detection device 10 and the detector 12 are connected so as to be able to transfer data and signals.

The detector 12 outputs an output waveform according to radiation. The detector 12 photoelectrically converts radiation into an electrical charge. The detector 12 then outputs an output waveform according to the converted electrical charge. For example, the radiation to be detected by the detector 12 includes at least one type among beta rays, heavy particle beams, neutron beams, and gamma rays.

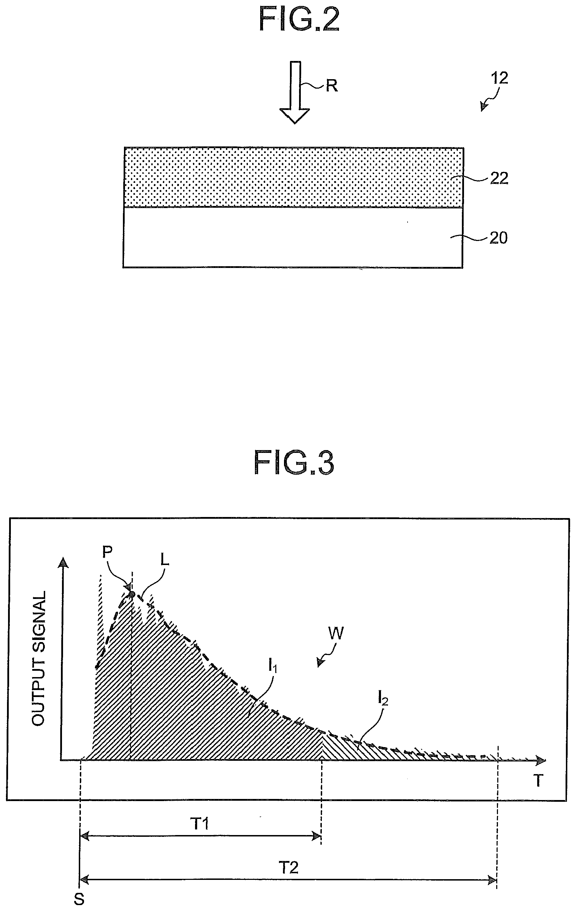

FIG. 2 is a schematic view illustrating an example of the detector 12. The detector 12 is a laminated body of a detection element 20 and a scintillator 22. It is noted that the detector 12 may not include the scintillator 22. The detector 12 may also be a semiconductor detector using cadmium telluride (CdTe), cadmium zinc telluride (CdZnTe), or silicon (Si).

The scintillator 22 converts radiation R into scintillation light. In other words, the scintillator 22 converts the radiation R into scintillation light (photon) having a longer wavelength than that of the radiation R.

The scintillator 22 is made of a scintillator material. The scintillator material emits scintillation light in response to incident radiation R. For example, the scintillator material includes Lu₂SiO₅: (Ce), LaBr₃: (Ce), YAP (yttrium aluminum perovskite):Ce, Lu(Y)AP:Ce, sodium iodide (NaI), zinc sulfide, anthracene, stilbene, naphthalene, diphenyloxazole (PPO), plastic, gadolinium oxyorthosilicate (GSO) (Ce-doped Gd₂SiO₅), CsI, CsI(Tl), CsI(Na), Bi₄Ge₃O₁₂, Ce-doped Lu₂SiO₅, NaI(Tl), CeF₃, PbWO₄, BaF₂, PbF₂, LiI(Eu), LYSO-Lu₂(₁₋ₓ)Y₂ₓSiO₅:Ce, LGSO (Lu, Gd)₂SiO₅, Al₂O₃, Ce:LiCaF, Eu:LiCaF, and LiF/CaF₂:Eu.

The detection element 20 converts incident light into an electrical charge. The detection element 20 may have a known structure. For example, the detection element 20 is a laminated body of a photoelectric conversion layer and an electrode layer.

The photoelectric conversion layer is made of a material that converts incident light into an electrical charge. In the present arrangement, the photoelectric conversion layer is made of a material that converts scintillation light into an electrical charge. For example, the photoelectric conversion layer is composed mainly of an inorganic material such as amorphous silicon, single-crystal silicon, an organic material, and the like.

From viewpoints of a high signal-to-noise (S/N) ratio of an output signal, saving material costs, easy facilitation, a high absorption coefficient, reducing weight, impact resistance, and the like, the photoelectric conversion layer is preferably a photo-detector having high photosensitivity such as a photomultiplier tube, an avalanche photo diode, or a Geiger mode operating avalanche diode, for example.

Returning to FIG. 1, description will be continued. Next, the radiation detection device 10 will be described.

The radiation detection device 10 includes a processing unit 14, a storage unit 16, and an output unit 18. The processing unit 14, the storage unit 16, and the output unit 18 are connected so as to be able to transfer data and signals.

The storage unit 16 stores therein various types of information. In the present arrangement, the storage unit 16 stores therein detected result information 16A and radiation type management information 16B. The detected result information 16A and the radiation type management information 16B will be described in detail later.

The output unit 18 outputs various types of information. For example, the output unit 18 is a known display device, a speaker, a lighting device, a communication device that communicates with an external device, or the like.

The processing unit 14 controls the radiation detection device 10. The processing unit 14 includes an acquisition unit 14A, a first integration unit 14B, a second integration unit 14C, a timing determination unit 14D, a storage control unit 14E, an identifying unit 14F, and an output control unit 14G.

For example, the acquisition unit 14A, the first integration unit 14B, the second integration unit 14C, the timing determination unit 14D, the storage control unit 14E, the identifying unit 14F, and the output control unit 14G are implemented by one or a plurality of processors. For example, the units described above may be implemented by causing a processor such as a central processing unit (CPU) to execute a computer program, in other words, software. The units described above may also be implemented using a processor including a dedicated integrated circuit (IC) or a circuit, in other words, hardware. The units described above may also be implemented by a combination of software and hardware. When the processors are used, each of the processors may implement one of the units, or implement two or more of the units.

The acquisition unit 14A acquires an output waveform from the detector 12.

The output waveform is a waveform of a signal indicating the radiation detected by the detector 12. In other words, the output waveform is a waveform indicating the detected energy of the radiation R that is detected by the detection element 20. For example, the detected energy is indicated by an electrical signal generated according to the number of detected photons.

In the present arrangement, the output waveform is a waveform in which a single pulse ranges from the timing when an output signal increases beyond a reference signal where the number of detected radiation is regarded as "0", to the timing when the output signal thereafter becomes equal to or less than the reference signal again. The reference signal may be set in advance to a threshold for determining whether to process the output signal as noise.

Every time the detector 12 detects radiation, the detector 12 sequentially outputs waveforms each according to the detected radiation type and radiation energy. In other words, the detector 12 sequentially outputs a plurality of output waveforms. Thus, the acquisition unit 14A sequentially acquires the output waveforms according to a lapse of time.

The acquisition unit 14A may also acquire an output waveform from an external device or the storage unit 16. In this case, one or a plurality of output waveforms output from the detector 12 are stored in an external device or the storage unit 16 in advance. The acquisition unit 14A can then acquire the output waveform by reading out the output waveform from the external device or the storage unit 16.

The acquisition unit 14A outputs the output waveform to the first integration unit 14B, the second integration unit 14C, and the timing determination unit 14D.

The first integration unit 14B calculates a first integrated value of the output waveform from detector 12 in a first integration period. The second integration unit 14C calculates a second integrated value of the output waveform in a second integration period. The first integration unit 14B and the second integration unit 14C calculate the first integrated value and the second integrated value for a single output waveform. Thus, when the acquisition unit 14A acquires the output waveforms, the first integration unit 14B and the second integration unit 14C calculate the first integrated value and the second integrated value for each of the output waveforms.

Processes to be performed by the first integration unit 14B and the second integration unit 14C will be described with reference to FIG. 3. FIG. 3 is a schematic view illustrating an example of an output waveform W.

A first integrated value I₁ is an integrated value of the output waveform W in a first integration period T1. A second integrated value I₂ is an integrated value of the output waveform W in a second integration period T2.

The first integration period T1 and the second integration period T2 have different period lengths. However, the first integration period T1 and the second integration period T2 have the same period start timing.

The period start timing of the first integration period T1 and the second integration period T2 is not limited as long as the period start timing is within the period of the output waveform W. For example, the period start timing of the first integration period T1 and the second integration period T2 may be any of timing before a peak P of the output waveform W, timing that matches with the peak P, and timing after the peak P, in the output waveform W.

In the example in FIG. 3, timing S at which the output waveform W appears is the start timing of the first integration period T1 and the second integration period T2, for example. The timing S at which the output waveform W appears is timing when the output signal exceeds the reference signal, from the state when the output signal is less than the reference signal where the output signal is regarded as noise. The definition of the reference signal is the same as described above.

The peak P indicates the point where the detection signal (output signal) is maximal in the output waveform W. In reality, the output waveform W may have a non-smooth waveform as illustrated in FIG. 3. In this case, the processing unit 14 generates an approximate line L that includes a single peak and that is indicated by a smooth curve, by linearly approximating or low-pass filtering the output waveform W. The processing unit 14 can then determine the point where the detection signal is maximal in the approximate line L, as the peak P.

Moreover, for example, the processing unit 14 sets a portion to be processed as noise in the output waveform W in advance. The processing unit 14 can also calculate the peak P from the approximate line L generated by removing the portion to be processed as noise. For example, the portion to be processed as noise is a waveform of a predetermined period from the timing when the output signal exceeds the reference signal from a state when the output signal is less than the reference signal.

The first integration period T1 and the second integration period T2 preferably include timing corresponding to the peak P in the output waveform W. Thus, the start timing of the first integration period T1 and the second integration period T2 is preferably timing before the peak P in the output waveform W.

When the first integration period T1 and the second integration period T2 both include the timing corresponding to the peak P in the output waveform P, the processing unit 14 can more accurately identify the type of radiation.

The ratio of the period lengths of the first integration period T1 and the second integration period T2 is not limited. The ratio of the period lengths of the first integration period T1 and the second integration period T2 may be adjusted according to the type of radiation R to be identified and the configuration of the detector 12.

The first integration unit 14B calculates the first integrated value I₁ of the output waveform W in the first integration period T1. The second integration unit 14C calculates the second integrated value I₂ of the output waveform W in the second integration period T2. Thus, the first integration unit 14B and the second integration unit 14C each calculate an integrated value of the same output waveform W in the period that has the same period start timing but different period lengths.

Returning to FIG. 1, description will be continued. The timing determination unit 14D determines the period start timing of the first integration period T1 and the second integration period T2 in the output waveform W. The period start timing may be determined in advance. For example, the timing determination unit 14D determines the timing at which the output signal exceeds the reference signal from a state when the output signal is less than the reference signal in the output waveform W, as the period start timing. The timing determination unit 14D then outputs the determined period start timing to the first integration unit 14B and the second integration unit 14C.

The first integration unit 14B calculates the first integrated value I₁ of the output waveform W acquired from the acquisition unit 14A, in the first integration period T1 from the period start timing received from the timing determination unit 14D. The first integration unit 14B then outputs the calculated first integrated value I₁ to the storage control unit 14E.

The second integration unit 14C calculates the second integrated value I₂ of the output waveform W acquired from the acquisition unit 14A, in the second integration period T2 from the period start timing received from the timing determination unit 14D. The second integration unit 14C then outputs the calculated second integrated value I₂ to the storage control unit 14E.

The first integration unit 14B and the second integration unit 14C may also be configured integrally. In this case, one integration unit can calculate the first integrated value I₁ in the first integration period T1 and the second integrated value I₂ in the second integration period T2, for the single output waveform W.

The storage control unit 14E stores the first integrated value I₁ and the second integrated value I₂ calculated for the output waveform W in the storage unit 16 in an associated manner. In the present arrangement, the storage control unit 14E registers the integrated values (first integrated value I₁ and second integrated value I₂) in the detected result information 16A.

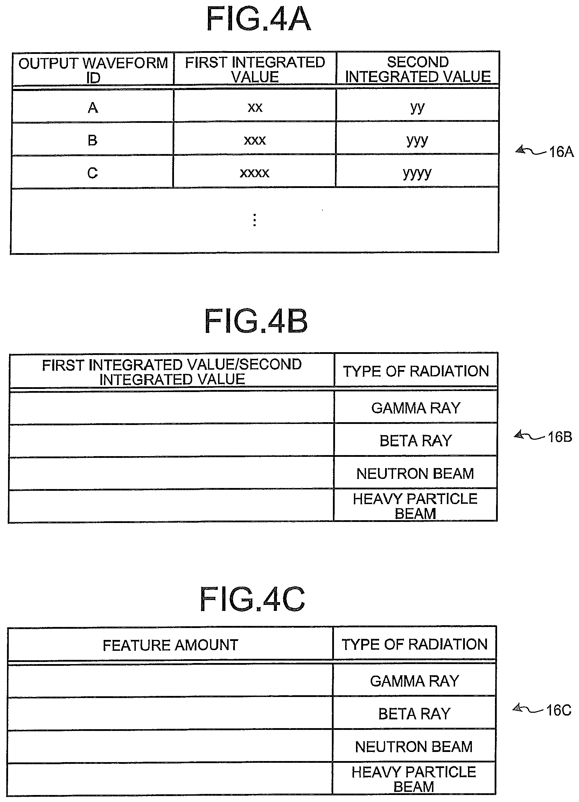

FIG. 4A to FIG. 4C are schematic views each illustrating a data configuration example of the detected result information 16A, the radiation type management information 16B, and radiation type management information 16C. The radiation type management information 16B and the radiation type management information 16C will be described later.

FIG. 4A is a schematic view illustrating a data configuration example of the detected result information 16A. In the detected result information 16A, an output waveform ID, the first integrated value I₁, and the second integrated value I₂ are associated with each other. The output waveform ID is identification information of the output waveform W.

Every time the first integrated value I₁ and the second integrated value I₂ for the output waveform W are calculated by the first integration unit 14B and the second integration unit 14C, the storage control unit 14E registers the first integrated value I₁ and the second integrated value I₂ in the detected result information 16A in association with the output waveform ID of the output waveform W.

Returning to FIG. 1, description will be continued. The identifying unit 14F identifies the type of radiation R incident on the detector 12.

In this example, the inventors of the present invention have found out that the output waveforms W output from the detector 12 differ depending on the type of radiation R. In other words, the generation process of scintillation photons in the detector 12 differs depending on the type of radiation R incident on the detector 12. More specifically, the time distribution of generation of the scintillation light in the scintillator 22 differs depending on whether the scintillation light is generated by gamma rays or by charged particles. Thus, in a later time, the distribution of the scintillation light due to the charged particles becomes greater than the distribution of photons due to the gamma rays.

Consequently, the inventors of the present invention have found out that the behavior of the photon generated in the detector 12 in terms of the time axis changes according to the type of radiation R. Moreover, the inventors have found out that a relation between the first integrated value I₁ and the second integrated value I₂ differs depending on the type of radiation R.

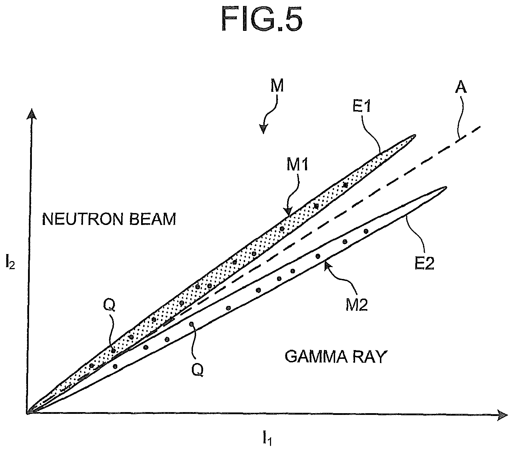

FIG. 5 is a schematic view illustrating an example of a relation between the first integrated value I₁ and the second integrated value I₂. For example, when the type of radiation R is neutron beams, a plot Q indicating the first integrated value I₁ and the second integrated value I₂ calculated from the output waveform W is distributed within an area E1. When the type of radiation R is gamma rays, the plot Q indicating the first integrated value I₁ and the second integrated value I₂ calculated from the output waveform W is distributed within an area E2.

In this manner, the inventors of the present invention have found out that a relation between the first integrated value I₁ and the second integrated value I₂ differs depending on the type of radiation R.

Thus, in the present arrangement, the identifying unit 14F identifies the type of radiation R incident on the detector 12, on the basis of the first integrated value I₁ of the output waveform W in the first integration period T1, and the second integrated value I₂ of the output waveform W in the second integration period T2.

More specifically, the identifying unit 14F identifies the type of radiation R by using the ratio of the first integrated value I₁ and the second integrated value I₂. It is assumed that the plot Q indicated by the first integrated value I₁ and the second integrated value I₂ of a certain output waveform W is located within the area E1. In this case, the identifying unit 14F identifies the type of radiation R as the neutron beams. It is also assumed that the plot Q indicated by the first integrated value I₁ and the second integrated value I₂ of a certain output waveform W is located within the area E2. In this case, the identifying unit 14F identifies the type of radiation R as the gamma rays.

For example, the processing unit 14 stores the radiation type management information 16B in the storage unit 16 in advance. FIG. 4B is a diagram illustrating a data configuration example of the radiation type management information 16B. The radiation type management information 16B is a database in which the ratio range of the first integrated value I₁ and the second integrated value I₂ is associated with the type of radiation. The data format of the radiation type management information 16B is not limited to the database. For example, the data format of the radiation type management information 16B may also be a table.

The processing unit 14 measures the range that the ratio of the first integrated value I₁ and the second integrated value I₂ may take for each type of the radiation R, using the detector 12 in advance. The processing unit 14 then registers the ratio range of the first integrated value I₁ and the second integrated value I₂ in the radiation type management information 16B in association with the type of radiation R in advance on the basis of the measured results.

In this case, the identifying unit 14F reads out, for each of the output waveforms W identified by the output waveform IDs, the type of radiation R corresponding to the ratio of the first integrated value I₁ and the second integrated value I₂ corresponding to the output waveform W from the radiation type management information 16B. With this process, the identifying unit 14F identifies the type of radiation R incident on the detector 12, corresponding to the output waveform W.

The identifying unit 14F may also identify the type of radiation R, by using a feature amount of a map representing a relation between the first integrated value I₁ and the second integrated value I₂ calculated from the output waveform W.

Description will now be made with reference to FIG. 5. As illustrated in FIG. 5, the distribution range of a plurality of the plots Q indicating the first integrated values I₁ and the second integrated values I₂ that are calculated from each of the output waveforms W differs depending on the type of radiation R. Thus, a map M representing a relation indicated by the plots Q differs depending on the type of radiation R.

The map M represents a distribution state of the plots Q indicating the first integrated values I₁ and the second integrated values I₂. For example, the map M is represented by linearly approximating the distribution of the plots Q, for each type of the radiation R.

In the example illustrated in FIG. 5, a map M1 of the neutron beams is subject to linear straight line regression. Similarly, a map M2 of the gamma rays is also subject to linear straight line regression. These maps (map M1 and map M2) have different inclinations.

In this case, the feature amount of the map M is the inclination of the linear straight line. It is noted that the feature amount is not limited to the inclination of the linear straight line. For example, the map M corresponding to the type of radiation R may be indicated by a particular curved line. In this case, the curvature of the curved line or the position of the maximum curvature may be used as the feature amount. Moreover, when there are two types of radiation to be identified, areas that are sectioned by a boundary A in the map M, that are adjacent to each other, and each of which corresponds to one of the types of radiation, may be used as the feature amounts. In this case, for example, the feature amount of the map M1 may be a range where the second integrated value I₂ is greater than the boundary A between the map M1 and the map M2 in FIG. 5. Similarly, the feature amount of the map M2 may be a range where the second integrated value I₂ is lower than the boundary A.

For example, the processing unit 14 stores the radiation type management information 16C in the storage unit 16 in advance. FIG. 4C is a diagram illustrating a data configuration example of the radiation type management information 16C. The radiation type management information 16C is a database in which the feature amount of the map M representing a relation between the first integrated value I₁ and the second integrated value I₂ is associated with the type of radiation R. It is noted that the data format of the radiation type management information 16C is not limited to the database. For example, the data format of the radiation type management information 16C may also be a table.

The processing unit 14 calculates the feature amount of the map M representing a relation between the first integrated value I₁ and the second integrated value I₂ for each type of the radiation R, by using the detector 12 in advance. The processing unit 14 may then register the feature amount of the map M representing a relation between the first integrated value I₁ and the second integrated value I₂ in the radiation type management information 16C in association with the type of radiation R in advance on the basis of the calculated result.

In this case, the identifying unit 14F plots the plot Q indicated by the first integrated value I₁ and the second integrated value I₂ corresponding to each of the output waveforms W, in a graph indicating a relation between the first integrated value I₁ and the second integrated value I₂. The identifying unit 14F then creates the map M represented by the plots Q indicating the relation between the first integrated values I₁ and the second integrated values I₂, corresponding to the output waveforms W that are output from the detector 12. For example, the identifying unit 14F creates the map M by linearly interpolating the plots Q.

The identifying unit 14F calculates the feature amount of the map M. For example, the identifying unit 14F calculates the inclination of the linear straight line indicated in the map M, as the feature amount.

The identifying unit 14F identifies the type of radiation R, by reading out the type of radiation R corresponding to the calculated feature amount, from the radiation type management information 16C. In other words, the identifying unit 14F identifies the type of radiation R, by using the feature amount of the map M representing a relation between the first integrated values I₁ and the second integrated values I₂ calculated from the output waveforms W.

It is noted that the type of radiation R identified by the identifying unit 14F is not limited. For example, the type of radiation R to be identified by the identifying unit 14F includes at least one of types of the beta rays, the heavy particle beams, the neutron beams, and the gamma rays.

Returning to FIG. 1, description will be continued. The output control unit 14G outputs the type of radiation R identified by the identifying unit 14F, to the output unit 18. For example, the output control unit 14G displays the identified type of the radiation R on a display device as the output unit 18. Moreover, for example, the output control unit 14G transmits the identified type of the radiation R, to an external device, via a communication unit as the output unit 18.

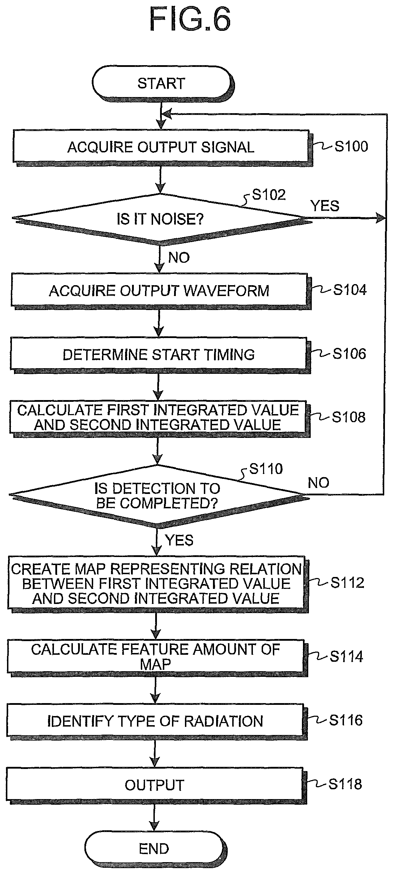

Next, an example of a procedure of information processing to be executed by the radiation detection device 10 of the present arrangement will be described. FIG. 6 is a flowchart illustrating an example of a procedure of information processing executed by the radiation detection device 10 of the present arrangement. As an example, FIG. 6 illustrates a procedure in which the identifying unit 14F identifies the type of radiation R using the feature amount of the map M.

First, the acquisition unit 14A acquires an output signal output from the detector 12 (step S100). Next, the acquisition unit 14A determines whether the acquired output signal is noise (step S102). For example, when the output signal is equal to or lower than a threshold of the detection energy indicating noise, the acquisition unit 14A determines that the output signal is noise.

When the acquisition unit 14A determines that the output signal is noise (Yes at step S102), the process returns to step S100. When the acquisition unit 14A determines that the output signal is not noise (No at step S102), the process proceeds to step S104.

At step S104, the acquisition unit 14A acquires the output waveform W (step S104). In other words, the acquisition unit 14A acquires the output signal output from the detector 12 as the output waveform W.

Next, the timing determination unit 14D determines the start timing of the periods (first integration period T1 and second integration period T2) to be used for integration, in the output waveform W acquired at step S104 (step S106).

Next, the first integration unit 14B and the second integration unit 14C calculate the respective integrated values (first integrated value I₁ and second integrated value I₂) of the output waveform W acquired at step S104 in the first integration period T1 and the second integration period T2, from the start timing determined at step S106 (step S108). The storage control unit 14E then stores the first integrated value I₁ and the second integrated value I₂ calculated at step S108 in the storage unit 16 in an associated manner.

Next, the processing unit 14 determines whether to complete the detection (step S110). For example, the processing unit 14 makes the determination at step S110, by determining whether a signal indicating the completion of detection is received from an operation unit. The operation unit is operated by a user.

When it is determined that the signal indicating the completion of detection has not yet received at step S110 (No at step S110), the process returns to step S100 described above. When it is determined that the signal indicating the completion of detection is received at step S110 (Yes at step S110), the process proceeds to step S112.

At step S112, the identifying unit 14F creates the map M representing a relation between the first integrated values I₁ and the second integrated values I₂ (step S112). For example, the identifying unit 14F refers to the detected result information 16A updated by the processes from step S100 to step S110. The acquisition unit 14A then plots the plot Q indicated by the first integrated value I₁ and the second integrated value I₂ corresponding to each of the output waveforms W included in the detected result information 16A, on a graph indicating a relation between the first integrated values I₁ and the second integrated values I₂. The identifying unit 14F then creates the map M represented by the plots Q indicating the relation between the first integrated values I₁ and the second integrated values I₂, corresponding to the output waveforms W output from the detector 12.

Next, the identifying unit 14F calculates the feature amount of the map M created at step S112 (step S114). For example, when the map M is the linear straight line, the identifying unit 14F calculates the inclination of the linear straight line as the feature amount.

Next, the identifying unit 14F identifies the type of radiation R (step S116). For example, the identifying unit 14F reads out the type of radiation R corresponding to the feature amount calculated at step S114, from the radiation type management information 16C. The identifying unit 14F identifies the type of radiation R by performing the reading process.

Next, the output control unit 14G outputs the type of radiation R identified at step S116 (step S118). Then, the present routine is terminated.

As described above, the radiation detection device 10 of the present arrangement includes the acquisition unit 14A and the identifying unit 14F. The acquisition unit 14A acquires the output waveform W from the detector 12 that outputs the output waveform W according to the radiation R. The identifying unit 14F identifies the type of radiation R incident on the detector 12, on the basis of the first integrated value I₁ of the output waveform W in the first integration period T1, and the second integrated value I₂ of the output waveform W in the second integration period T2.

In this manner, the radiation detection device 10 of the present arrangement identifies the type of radiation R incident on the detector 12, on the basis of the first integrated value I₁ of the output waveform W in the first integration period T1, and the second integrated value I₂ of the output waveform W in the second integration period T2. Thus, the radiation detection device 10 of the present arrangement does not require the number of detectors 12 corresponding to the types of radiation R to be detected. Moreover, the radiation detection device 10 of the present arrangement can identify the type of radiation R without digitally sampling the whole output signal waveform.

Consequently, the radiation detection device 10 of the present arrangement can easily identify the type of radiation R.

Moreover, the radiation detection device 10 of the present arrangement can identify the type of radiation R without performing digital sampling with high sampling rate such as above 100 Mega-sample per seconds. Thus, the radiation detection device 10 can reduce the processing load and save power, in addition to the effects described above.

Furthermore, the radiation detection device 10 of the present arrangement does not need to include the number of detectors 12 corresponding to the types of radiation R to be measured. Thus, the radiation detection device 10 is capable of reducing the cost of the detection system 1, reducing the size of the detection system 1, improving the portability of the detection system 1, and saving power, for example, in addition to the effects described above.

Still furthermore, the radiation detection device 10 of the present arrangement can easily identify the type of radiation R even in an environment where a plurality of types of the radiation R such as gamma rays, alpha rays, beta rays, neutron beams, and heavy particle beams are present in a mixed manner. Moreover, even when some of the types of radiation R have similar output waveforms W, the radiation detection device 10 of the present arrangement can easily identify the type of radiation R.

Still furthermore, the radiation detection device 10 of the present arrangement identifies the type of radiation R incident on the detector 12, on the basis of the first integrated value I₁ of the output waveform W in the first integration period T1 and the second integrated value I₂ of the output waveform W in the second integration period T2. Thus, the detector 12 to output the output waveform W is not limited. In other words, the radiation detection device 10 can identify the type of radiation R from the output waveforms W detected by various detectors 12, by adjusting the first integration period T1 and the second integration period T2 according to the detector 12.

### Hardware Configuration

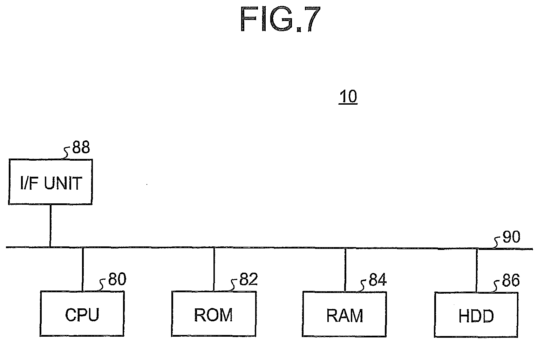

Next, a hardware configuration of the radiation detection device 10 of the arrangement described above will be described. FIG. 7 is a block diagram illustrating a hardware configuration example of the radiation detection device 10 of the arrangement described above.

In the radiation detection device 10 of the arrangement described above, a CPU 80, a read-only memory (ROM) 82, a random access memory (RAM) 84, a hard disk drive (HDD) 86, and an interface (I/F) unit 88 are connected with each other through a bus 90, and the radiation detection device 10 of the arrangement described above has a normal hardware configuration using a computer.

The CPU 80 is a computing device that controls the entire process of the radiation detection device 10. The RAM 84 stores therein data required for various processes performed by the CPU 80. The ROM 82 stores therein a computer program and the like for implementing the various processes to be performed by the CPU 80. The HDD 86 stores therein data to be stored in the storage unit 16 described above. The I/F unit 88 is an interface connected to an external device and an external terminal via a communication line and the like, and that receives and transmits data with the connected external device and external terminal.

A computer program to execute the processes described above that are to be executed by the radiation detection device 10 of the arrangement described above is provided by being incorporated in the ROM 82 and the like in advance.

The computer program to be executed by the radiation detection device 10 of the arrangement described above may be provided by being recorded on a computer-readable storage medium such as a compact disc-read only memory (CD-ROM), a flexible disk (FD), a compact disc-recordable (CD-R), and a digital versatile disc (DVD), in a file in a format installable or executable on these devices.

The computer program to be executed by the radiation detection device 10 of the arrangement described above may also be provided by being stored on a computer connected to a network such as the Internet, and downloaded via the network. In addition, the computer program to execute the processes described above in the radiation detection device 10 of the arrangement described above may be provided or distributed via a network such as the Internet.

With the computer program for executing the various processes described above that is to be executed by the radiation detection device 10 of the arrangement described above, the units described above are to be generated on a main storage device.

Various types of information stored in the HDD 86 described above, in other words, various types of information stored in the storage unit 16 may be stored in an external device (such as a server). In this case, the external device and the CPU 80 may be connected via the I/F unit 88.

The radiation detection device 10 is applicable to various devices for detecting the radiation R. For example, the radiation detection device 10 is applicable to identify the radiation R in an environment where unspecified types of radiation R are present in a mixed manner. For example, the environment where the unspecified types of radiation R are present in a mixed manner is a nuclear power plant and the like.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the devices described herein may be made.
Example 1. A radiation detection device includes an acquisition unit and an identifying unit. The acquisition unit is configured to acquire an output waveform, from a detector configured to output the output waveform according to radiation. The identifying unit is configured to identify a type of radiation incident on the detector, based on a first integrated value of the output waveform in a first integration period and a second integrated value of the output waveform in a second integration period.
Example 2. In the radiation detection device according to Example 1, the first integration period and the second integration period have the same period start timing and different period lengths in the output waveform.
Example 3. The radiation detection device according to Example 2 further includes a timing determination unit configured to determine the period start timing of the first integration period and the second integration period in the output waveform.
Example 4. In the radiation detection device according to any one of Examples 1 to 3, the first integration period and the second integration period include timing corresponding to a peak of the output waveform.
Example 5. The radiation detection device according to any one of Examples 1 to 4, the identifying unit is configured to identify the type of radiation using a ratio of the first integrated value and the second integrated value.
Example 6. In the radiation detection device according to any one of Examples 1 to 5, the identifying unit is configured to identify the type of radiation using a feature amount of a map representing a relation between the first integrated value and the second integrated value calculated from a plurality of the output waveforms.
Example 7. The radiation detection device according to Example 6 further includes a storage unit configured to store therein radiation type management information in which the feature amount and the type of radiation are associated with each other. The identifying unit is configured to identify the type of radiation by reading out the type of radiation corresponding to the calculated feature amount in the radiation type management information.
Example 8. The radiation detection device according to any one of Examples 1 to 7 further includes a first integration unit and a second integration unit. The first integration unit is configured to calculate the first integrated value of the output waveform in the first integration period. The second integration unit is configured to calculate the second integrated value of the output waveform in the second integration period.
Example 9. A radiation detection method includes: acquiring an output waveform from a detector configured to output the output waveform according to radiation; and identifying a type of radiation incident on the detector, based on a first integrated value of the output waveform in a first integration period and a second integrated value of the output waveform in a second integration period.

## Claims

1. A radiation detection device (10) comprising:
an acquisition unit (14A) configured to acquire an output waveform, from a detector (12) configured to output the output waveform according to radiation; and
an identifying unit (14F) configured to identify a type of radiation incident on the detector (12), based on a first integrated value of the output waveform in a first integration period and a second integrated value of the output waveform in a second integration period.

2. The radiation detection device (10) according to claim 1, wherein the first integration period and the second integration period have the same period start timing and different period lengths in the output waveform.

3. The radiation detection device (10) according to claim 2, further comprising a timing determination unit (14D) configured to determine the period start timing of the first integration period and the second integration period in the output waveform.

4. The radiation detection device (10) according to any one of claims 1 to 3, wherein the first integration period and the second integration period include timing corresponding to a peak of the output waveform.

5. The radiation detection device (10) according to any one of claims 1 to 4, wherein the identifying unit (14F) is configured to identify the type of radiation using a ratio of the first integrated value and the second integrated value.

6. The radiation detection device (10) according to any one of claims 1 to 5, wherein the identifying unit (14F) is configured to identify the type of radiation using a feature amount of a map representing a relation between the first integrated value and the second integrated value calculated from a plurality of the output waveforms.

7. The radiation detection device (10) according to claim 6, further comprising:
a storage unit (16) configured to store therein radiation type management information in which the feature amount and the type of radiation are associated with each other, wherein
the identifying unit (14F) is configured to identify the type of radiation by reading out the type of radiation corresponding to the calculated feature amount in the radiation type management information.

8. The radiation detection device (10) according to any one of claims 1 to 7, further comprising:
a first integration unit (14B) configured to calculate the first integrated value of the output waveform in the first integration period, and
a second integration unit (14C) configured to calculate the second integrated value of the output waveform in the second integration period.

9. A radiation detection method, comprising:
acquiring an output waveform from a detector (12) configured to output the output waveform according to radiation (S100); and
identifying a type of radiation incident on the detector (12), based on a first integrated value of the output waveform in a first integration period and a second integrated value of the output waveform in a second integration period (S116).
